(19) Europäisches Patentamt
European Patent Office
Office européen des brevets

(11) **EP 2 596 338 B1**

(12) **FASCICULE DE BREVET EUROPEEN**

(45) Date de publication et mention
de la délivrance du brevet:
**01.04.2020 Bulletin 2020/14**

(21) Numéro de dépôt: **11746653.2**

(22) Date de dépôt: **22.07.2011**

(51) Int Cl.:
***G01N 21/85*** *(2006.01)*

(86) Numéro de dépôt international:
**PCT/IB2011/053276**

(87) Numéro de publication internationale:
**WO 2012/011080 (26.01.2012 Gazette 2012/04)**

(54) **PROCEDE D'ESTIMATION DE LA QUANTITE D'ENTITES DEPOSEES SUR DES MICROPARTICULES EN SUSPENSION DANS UNE SOLUTION, DISPOSITIF ASSOCIE ET UTILISATION DE CE DISPOSITIF.**

VERFAHREN ZUR SCHÄTZUNG DER MENGE VON ENTITÄTEN, DIE AUF IN EINER LÖSUNG SUSPENDIERTEN MIKROPARTIKELN AUFGEBRACHT SIND, ENTSPRECHENDE VORRICHTIUNG UND ANWENDUNG DER VORRICHTUNG

METHOD FOR ESTIMATING THE QUANTITY OF ENTITIES DEPOSITED ON MICROPARTICLES IN SUSPENSION IN A SOLUTION, ASSOCIATED DEVICE AND USE OF THE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2010 FR 1003080**

(43) Date de publication de la demande:
**29.05.2013 Bulletin 2013/22**

(73) Titulaires:
• **Commissariat à l'Énergie Atomique et aux Énergies Alternatives**
**75015 Paris (FR)**
• **Sanofi Pasteur**
**69007 Lyon Cedex (FR)**

(72) Inventeurs:
• **POHER, Vincent**
**62340 Guines (FR)**
• **FANTONI, Frédéric**
**F-38100 Grenoble (FR)**
• **MOURIER, Véronique**
**F-38430 Saint de Morians (FR)**
• **PELTIE, Philippe**
**F-38760 Saint Paul De Varces (FR)**
• **RONZON, Frédéric**
**F-69610 Montromant (FR)**
• **VALENTIN, Christian**
**F-69008 Lyon (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
EP-A2- 0 118 894     WO-A1-90/08961
WO-A1-2004/044232    GB-A- 2 432 660
US-A- 4 826 319      US-A1- 2007 054 417
US-B1- 7 315 372

• **Y. PIEDERRIERE ET AL: "Particle aggregation monitoring by speckle size measurement; application to blood platelets aggregation", OPTICS EXPRESS, vol. 12, no. 19, 20 septembre 2004 (2004-09-20), pages 4596-4601, XP002616137, US**

**Description**

La présente invention se rapporte au domaine du dépôt d'entités sur des microparticules en suspension dans une solution.

En particulier, l'invention concerne un dispositif et un procédé d'estimation de la quantité d'entités déposées sur des microparticules.

Elle peut notamment trouver application dans la formulation des vaccins.

En effet, la formulation des vaccins met en jeu des entités qui sont des molécules d'antigène, protéines de dimensions nanométriques, venant se déposer par adsorption à la surface de microparticules d'adjuvants. Ces microparticules d'adjuvants sont généralement des particules d'Aluminium de dimension micronique, en suspension dans une solution, par exemple un tampon salin. Cette étape d'adsorption s'effectue généralement dans une cuve, contenant initialement les microparticules d'adjuvant en suspension dans une solution, et à laquelle on ajoute une solution comportant les antigènes. Il s'en suit une période d'agitation, au cours de laquelle les antigènes s'adsorbent peu à peu à la surface des microparticules d'adjuvant.

Il se pose le problème du contrôle, le plus précis possible, de la quantité d'antigène adsorbée sur les microparticules d'adjuvants. En effet, cette quantité est un paramètre important, dont on aimerait pouvoir disposer au cours de l'agitation, au moyen d'une mesure effectuée en continu, ou du moins à intervalles réguliers.

On sait que des interactions d'anticorps sur des antigènes déposés à la surface des microparticules sont susceptibles de faire évoluer les propriétés optiques de la solution, et notamment la quantité de lumière diffusée selon un angle donné.

Par exemple, le document "Latex immunoagglutination assay for a vasculitis marker in a microfluidic device using static light scattering detection", Lucas L.J, Biosensors and bioelectronics 22, 2007 (D1) décrit comment on peut mettre en évidence l'agglutination de microsphères sous l'effet de réactions anticorps-antigène, par une méthode optique.

Plus précisément, une solution contenant des microbilles de Latex, à la surface desquelles un antigène est préalablement greffé, est placé dans un réseau microfluidique. L'ajout d'anticorps correspondant à cet antigène génère une agglutination des microsphères, sous l'effet de la réaction antigène-anticorps. Cette agglutination est désignée par le terme d'immunoagglutination. Cette agglutination entraîne une variation de l'atténuation de la lumière par l'échantillon liquide en fonction de la concentration en anticorps ajoutés dans la solution.

Selon un autre exemple, le document "Lab-on-a-chip immunoassay for multiple antibodies using microsphere light", Lucas L.J., biosensors and bioelectronics = 23, 2007 (D2) met en évidence une variation de la diffusion de la lumière traversant une solution, disposée dans une puce microfluidique, sous l'effet d'une immunoagglutination induite par des réactions antigènes-anticorps ayant lieu à la surface de microsphères.

La surface des microsphères est initialement fonctionnalisée par un antigène. Lorsqu'on ajoute un anticorps correspondant à cet antigène, les réactions anticorps-antigène conduisent à une agglutination des microsphères, générant une variation de la diffusion de la lumière dans la solution.

Les méthodes précitées ne permettent pas de mesurer la quantité d'antigènes déposés à la surface des microsphères.

Par ailleurs, il a déjà été proposer d'utiliser une figure de Speckle pour quantifier la diffusion de la lumière dans différentes solutions. C'est par exemple le cas de la méthode présentée dans le document "Etude du speckle de milieux diffusants liquides. Application à la détermination de paramètres biophysiques", Piederrierre Y., thèse de doctorat présentée à l'université de Bretagne occidentale (D3).

En effet, ce document montre comment on peut utiliser une figure de Speckle pour quantifier la diffusion de la lumière dans différentes solutions, chaque solution contenant une concentration donnée en microbilles de polystyrène de dimension fixe, cette dimension variant, selon les solutions, entre 0,2 $\mu$m et 6 $\mu$m.

On constate alors que l'analyse d'une image de Speckle permet une estimation du coefficient de diffusion de la lumière de chaque solution.

La question de l'estimation de la quantité d'entités adsorbées à la surface des microbilles n'est en revanche pas abordée. Cette estimation n'apparaît d'ailleurs pas possible car l'analyse de l'image de Speckle ainsi effectuée ne permet pas d'estimer la dimension des microbilles contenues dans chaque solution. Les auteurs précisent eux-mêmes que deux milieux constitués de particules de dimensions différentes peuvent produire, pour une même longueur d'atténuation, des grains de Speckle de dimensions similaires, cf. page 93 second paragraphe de ce document.

L'état de la technique est aussi divulgué dans les documents US 2007/054417 A1, EP 0 118 894 A2, WO 90/08961 A1 et "Particle aggregation monitoring by speckle size measurement; application to blood platelets aggregation", Piederrierre Y. Il serait cependant intéressant d'estimer la quantité d'entités adsorbés à la surface de microparticules en suspension dans une solution.

Dans l'exemple de la formulation des vaccins mentionné précédemment, l'ajout de la solution comportant les antigènes dans la solution comportant les microparticules d'adjuvant est suivi d'une période de mélange, au cours de laquelle les antigènes s'adsorbent peu à peu à la surface des microparticules d'adjuvant.

Pendant cette période de mélange entre les antigènes et les microparticules, on n'a actuellement aucune idée de l'évolution de la quantité d'antigènes adsorbés sur les microparticules.

Un objectif de l'invention est, dans le cadre de la formulation de vaccins, de remédier à ce problème.

En effet, cette quantité est un paramètre important, dont on aimerait pouvoir disposer au cours de la période de mélange entre les antigènes et les microparticules, au moyen d'une mesure effectuée en temps réel.

Par temps réel, on entend une durée compatible avec un suivi du processus de formulation d'un vaccin, cette durée étant typiquement inférieure à 10 secondes, et idéalement de l'ordre de la seconde. Idéalement, cela correspond donc à une mesure de la quantité d'antigènes adsorbés sur les microparticules d'adjuvants à intervalles réguliers, chaque seconde.

Outre le contrôle de la formulation de vaccins, une telle mesure permettrait de mieux comprendre les mécanismes selon lesquels les antigènes sont adsorbés à la surface des particules d'adjuvants, et notamment la cinétique d'adsorption de ces antigènes.

L'invention ne vise pas seulement la formulation de vaccins. Ainsi, et plus généralement, un autre objectif de l'invention est d'estimer la quantité d'entités adsorbées sur des microparticules en suspension dans une solution.

Un objectif de l'invention est encore d'estimer la quantité d'entités adsorbées sur des microparticules en suspension dans une solution, de façon précise.

Plus généralement encore, un objectif de l'invention est d'estimer la quantité d'entités déposées sur des microparticules en suspension dans une solution.

Pour atteindre l'un au moins de ces objectifs, l'invention propose un procédé selon la revendication d'estimation de la quantité d'entités déposées sur des microparticules en suspension dans une solution, comprenant les étapes suivantes :

(a) on éclaire la solution avec une source de lumière;
(b) on détecte un signal optique formé par la diffusion, dans la solution, de la lumière d'éclairage; ce signal optique détecté étant au moins un image de tavelures;
(c) on analyse le signal optique obtenu à l'étape (b) afin d'obtenir un indicateur relatif à ce signal;
(d) on compare l'indicateur obtenu à l'étape (c) à un indicateur de référence, obtenu pour une solution de référence la comparaison permettant d'estimer la quantité d'entités déposées sur les microparticules.

Le procédé selon l'invention pourra comprendre les caractéristiques suivantes, prises seules ou en combinaison :

- l'indicateur obtenu à l'étape (c) correspond à une dimension moyenne des tavelures de ladite au moins une image de tavelures ;
- l'indicateur obtenu à l'étape (c) correspond à l'intensité moyenne de ladite au moins une image de tavelures ;
- les entités présentent une dimension comprise entre 1nm et 10$\mu$m et les microparticules présentent une dimension comprise entre 0,1 $\mu$m et 100$\mu$m ;

- la solution est choisie parmi l'une des solutions suivantes : solution aqueuse, par exemple une solution aqueuse saline, ou solution de trishydroxyméthylaminométhane ;
- l'étape (a) s'effectue avec une lumière cohérente ;
- l'étape (a) s'effectue avec une lumière monochromatique.

Pour atteindre l'un au moins de ces objectifs, l'invention propose également un dispositif selon la revendication 8 d'estimation de la quantité d'entités déposées sur des microparticules en suspension dans une solution, comprenant:

- une source de lumière destinée à éclairer la solution ;
- un imageur pour détecter un signal optique formé par la diffusion de la lumière dans la solution ; ce signal optique étant au moins une image de tavelures; et
- un moyen d'analyse et de traitement du signal optique ainsi détecté pour obtenir un indicateur susceptible d'être comparé à un indicateur de référence obtenu pour une solution de référence, la comparaison permettant d'estimer la quantité d'entités déposées sur les microparticules.

Le dispositif selon l'invention pourra comprendre l'une au moins des caractéristiques suivantes, prises seules ou en combinaison :

- la source de lumière et l'imageur sont intégrés dans un réceptacle étanche, immergeable dans la solution ;
- il comprend, en outre, une capacité destinée à contenir la solution ;
- la source de lumière et l'imageur sont disposés de part et d'autre de la capacité ;
- il comprend un moyen, disposé avant l'imageur, pour éliminer les photons de lumière ayant diffusés plusieurs fois dans la solution ;
- la source de lumière est une source de lumière cohérente, par exemple formée par un laser ;
- l'imageur est un imageur matriciel, par exemple de type matrice CCD, CMOS ou matrice de photodiodes ;
- l'imageur matriciel détecte une image de tavelures en tant que signal optique.

Le dispositif selon l'invention peut plus particulièrement être utilisé pour l'estimation de la quantité d'entités adsorbées et/ou désorbées sur les microparticules en suspension dans la solution.

D'autres caractéristiques, buts et avantages de l'invention seront énoncés dans la description détaillée ci-après faite en référence aux figures suivantes :

- la figure 1 expose le principe de la méthode selon une configuration dite en transmission ;

- la figure 2 représente un exemple d'image obtenue selon cette configuration ;
- la figure 3 montre un profil d'une image d'autocorrélation ;
- la figure 4 représente le dispositif utilisé pour les tests effectués afin de montrer la faisabilité du procédé selon l'invention ;
- la figure 5, qui comprend les figures 5(a) à 5(f), représente des images de tavelures obtenues sur le plan de visualisation d'un dispositif conforme à celui de la figure 4, dans le cadre de tests effectués avec différentes concentrations de l'entité destinée à être adsorbée sur les microparticules en suspension dans la solution selon le procédé conforme à l'invention ;
- la figure 6, qui comprend les figures 6(a) à 6(c), représente des images de tavelures obtenues sur le plan de visualisation d'un dispositif conformé à celui de la figure 4, pour différentes solutions tampon ;
- la figure 7 représente l'évolution de la dimension moyenne des tavelures, selon deux directions (Ox et Oy) en fonction de la concentration d'entité dans la solution comprenant les microparticules, lorsque cette dernière est une solution tampon TRIS (Trishydroxyméthylaminométhane), dans une configuration en transmission;
- la figure 8 représente l'évolution de la dimension moyenne des tavelures, selon deux directions (Ox et Oy) en fonction de la concentration en entité dans la solution comprenant les microparticules, lorsque cette dernière est une solution tampon Phosphate, dans une configuration en transmission;
- la figure 9 représente un détail de la figure 7, sur une plage de concentration réduite ;
- la figure 10 représente l'évolution de l'intensité moyenne de l'image de tavelures en fonction de la concentration d'entité dans la solution comprenant les microparticules, lorsque cette dernière est une solution tampon TRIS (Trishydroxyméthylaminométhane), dans une configuration en transmission;
- la figure 11 expose le principe de la méthode selon une configuration dite en rétrodiffusion ;
- la figure 12 représente l'évolution de la dimension moyenne des tavelures, selon une direction, en fonction de la concentration d'entité dans la solution comprenant les microparticules,lorsque cette dernière est une solution tampon TRIS, dans une configuration en rétrodiffusion ;
- la figure 13 représente l'évolution de l'intensité moyenne de l'image de tavelures en fonction de la concentration d'entité dans la solution comprenant les microparticules, lorsque cette dernière est une solution tampon TRIS, dans une configuration en rétrodiffusion;
- la figure 14 représente une variante d'un dispositif pouvant être utilisé pour mettre en œuvre le procédé selon l'invention, fonctionnant en rétrodiffusion ;

- la figure 15 représente l'évolution de l'intensité moyenne de l'image de tavelures obtenue par l'ajout de protéine BSA dans une solution TRIS comprenant les microparticules, en fonction de la concentration de protéines adsorbées, avec le dispositif de la figure 14 ;
- la figure 16 est une autre représentation des résultats présentés sur la figure 15 ;
- la figure 17 représente l'évolution de l'intensité moyenne de l'image de tavelures obtenue par l'ajout de protéines BSA dans une solution TRIS comprenant les microparticules, en fonction de la concentration de protéines ajoutées, avec le dispositif de la figure 14 et ce, pour une gamme de concentration de protéines de BSA étendue par rapport à la figure 15;
- la figure 18 représente différentes courbes, chacune de ces courbes montrant l'évolution de l'intensité moyenne de l'image de tavelures obtenue par l'ajout de protéines de nature prédéfinie dans une solution TRIS comprenant les microparticules, en fonction de la concentration de protéines ajoutées, ces courbes étant obtenues avec le dispositif de la figure 14 ;
- la figure 19 est similaire à la figure 18, mais pour d'autre protéines ;
- la figure 20 est similaire à la figure 18, mais pour l'ajout successif de deux protéines distinctes, en l'occurrence la protéine BSA et l'antigène de l'hépatite B ;
- la figure 21 représente principalement l'évolution de l'intensité lumineuse moyenne de l'image de tavelures obtenue par l'ajout d'une solution tampon PHOS dans une solution TRIS comprenant des protéines BSA déjà adsorbées sur des microparticules en suspension dans la solution, en fonction du temps.
- la figure 22 représente un autre dispositif pouvant être utilisé pour mettre en œuvre le procédé selon l'invention, fonctionnant en rétrodiffusion ;
- la figure 23 représente une variante du dispositif de la figure 22.

D'une façon générale, l'invention concerne le suivi du dépôt d'entités sur des microparticules en suspension dans une solution. De préférence, la dimension des entités est au moins 10 fois inférieure à la dimension des microparticules.

Le procédé selon l'invention permet d'estimer la quantité d'entités déposées sur des microparticules en suspension dans une solution. Ce procédé comprend les étapes suivantes :

(a) on éclaire la solution avec une source de lumière, la lumière étant par exemple cohérente ;
(b) on détecte un signal optique formé par la diffusion, dans la solution, de la lumière d'éclairage, ce signal optique étant au moins une image de tavelures;
(c) on analyse le signal optique obtenu à l'étape (b) afin d'obtenir un indicateur relatif à ce signal;

(d) on compare l'indicateur obtenu à l'étape (c) à un indicateur de référence, obtenu pour une solution de référence la comparaison permettant d'estimer la quantité d'entités déposées sur les microparticules.

Par particules micrométriques, ou microparticules, on entend des particules de diamètre (ou de plus grande diagonale) compris entre $0,1\mu m$ et $100\mu m$, typiquement $1\mu m$ à $15\ \mu m$, par exemple $3\mu m$.

Les microparticules peuvent être de nature organique ou minérale.

Dans le cas de microparticules minérales, il peut notamment s'agir de sels minéraux connus comme adjuvants vaccinaux, tels que les sels de calcium, de fer, ou de façon plus commune d'aluminium. Ces sels peuvent être des hydroxydes, en particulier des oxyhydroxydes, des phosphates tels que des hydroxyphosphates ou des orthophosphates, des sulfates,..., ou encore des mélanges de ceux-ci, notamment des mélanges d'hydroxydes et de phosphates.

Ces microparticules sont contenues dans une solution liquide, telle qu'une solution aqueuse, par exemple un tampon salin adapté, par exemple le TRIS (trishydroxyméthylaminométhane). La concentration de ces particules dans la solution est généralement comprise entre quelques centaines de mg/l et quelques dizaines de g/l, de préférence entre 1g/l et 10 g/l. Ces concentrations permettent d'obtenir une image des tavelures par la diffusion de la lumière dans la solution.

Par dépôt d'une entité sur une microparticule, on entend l'adsorption de cette entité sur la microparticule mais également, de façon plus générale, la création d'une liaison entre une entité à la surface d'une microparticule, la liaison pouvant être par exemple une liaison covalente, électrostatique, ionique, hydrogène, halogène ou métallique.

Les entités qui sont déposées sur les microparticules peuvent être de nature variée.

Il peut s'agir de composés chimiques ou de substances biologiques, telles que des protéines, des peptides, des polysaccharides, des glycoprotéines, des lipides, des glycolipides, des polynucléotides, des virus ou des bactéries.

Dans le cas de l'application de l'invention à la formulation de vaccins, ces entités peuvent être des antigènes ou des composés exerçant une activité adjuvante. La présente invention a en particulier été mise en oeuvre avec une protéine-modèle en tant qu'entité: l'albumine sérique bovine (ou *Bovine Serum Albumine ou BSA* selon la terminologie anglo-saxonne). Généralement, une protéine BSA a une dimension comprise entre quelques nm et quelques $\mu m$. Généralement, la protéine BSA a une dimension comprise entre 1nm et 200 nm, si bien qu'elle peut être qualifiée d'entité nanométrique.

Par quantification du dépôt d'entités sur les microparticules, on entend par exemple l'estimation d'une quantité moyenne d'entités déposées, par exemple par adsorption, sur les microparticules.

Les termes « tavelures », « Speckle » ou « grains de Speckle » sont équivalents.

Le terme « imageur matriciel » désigne tout capteur d'image se présentant sous une forme matricielle. A titre d'exemple, il peut s'agir d'une matrice CCD (pour Charge Coupled Device selon la terminologie anglo-saxonne), CMOS (pour Complementary Metal Oxide Semiconductor selon la terminologie anglo-saxonne) ou de photodiodes.

L'indicateur relatif à une image de tavelures peut être une dimension moyenne, selon une direction ou une surface donnée, des tavelures de ladite image.

Cet indicateur peut être obtenu par le calcul de la fonction d'autocorrélation de l'image analysée.

En variante, cet indicateur peut également correspondre à la dimension moyenne des tavelures d'une pluralité d'images obtenues selon des configurations de mesure analogues.

Selon une autre variante, l'indicateur relatif à une image de tavelures peut également être l'intensité de l'image de tavelures, une telle intensité étant obtenue en effectuant l'intégrale de tout ou partie des pixels de cette image. Cela revient à sommer la valeur des pixels contenus sur tout ou partie de cette image.

Cet indicateur peut encore être l'intensité moyenne d'une pluralité d'images de tavelures obtenues selon des configurations de mesure analogues.

Quelle que soit la nature de l'indicateur choisi, cet indicateur est généralement exprimé relativement à un indicateur de référence. Par exemple, on peut comparer un indicateur mesuré sur une image et le comparer au même indicateur, dit indicateur initial, établi sur une image initiale. Cette comparaison s'exprime alors sous la forme d'un indicateur relatif, par exemple sous la forme d'un rapport entre l'indicateur mesuré et l'indicateur initial, ou encore sous la forme d'une soustraction de l'indicateur mesuré avec l'indicateur initial.

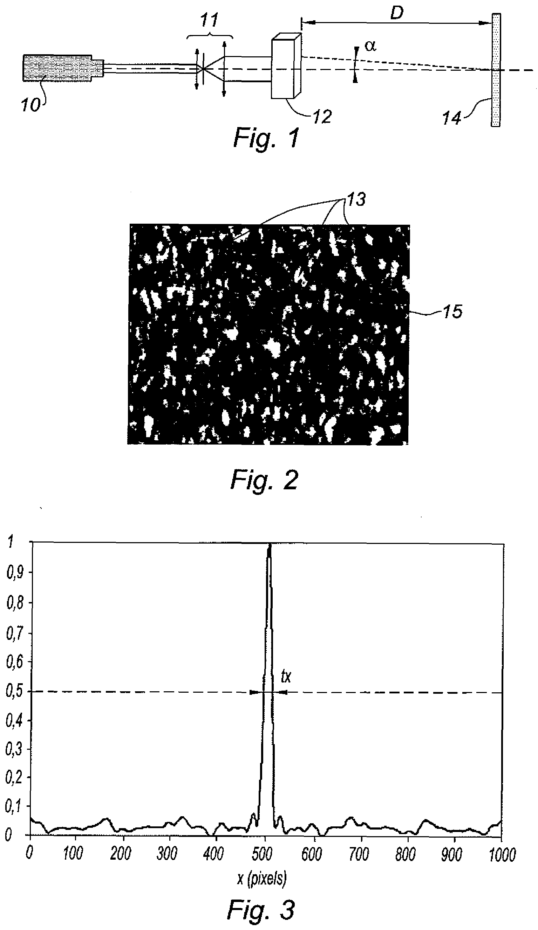

Nous allons à présent décrire le principe de fonctionnement du dispositif de mesure, en se reportant aux figures 1 à 3.

La figure 1 expose le principe de la mise en oeuvre du procédé selon l'invention, selon un premier mode de réalisation, dit en transmission.

Cela consiste à éclairer avec une lumière cohérente, par exemple issue d'une source de rayonnement laser 10, et, préalablement mise en forme par des moyens dédiés 11, une solution contenue dans une capacité 12 et comportant des microparticules en suspension. Il s'agit de l'étape (a) du procédé.

Les microparticules en suspension dans la solution diffusent la lumière incidente provenant du laser 10 et forment des tavelures 13 (également connues sous le nom de grains de « Speckle ») à la surface 14 d'un imageur matriciel, également nommée plan de visualisation. On peut alors détecter, dans le plan de visualisation 14, une image de tavelures 15 formées par la diffusion de la lumière dans la solution. Il s'agit de l'étape (b) du procédé.

La figure 2 représente une image de tavelures 15 détectée par la surface 14 de l'imageur matriciel, cette image comportant plusieurs tavelures 13.

Les dimensions de ces tavelures 13 dépendent de la configuration de mesure, à savoir le type d'imageur matriciel, la distance D entre l'imageur matriciel 14 et la capacité 12 assimilable à une cuve et l'orientation α de l'imageur matriciel 14 par rapport à la cuve 12, mais également des propriétés optiques de la solution. On comprend alors que lorsque la configuration de mesure est fixée, les dimensions des tavelures ne dépendent que des propriétés optiques de la solution présente dans la capacité.

L'image de tavelures 15 obtenue sur la surface 14 de l'imageur matriciel ne peut cependant pas être exploitée directement.

Il est alors nécessaire de disposer d'un indicateur, relatif à cette image de tavelures, pouvant être corrélé aux propriétés optiques de la solution. Il s'agit de l'étape (c) du procédé.

Comme évoqué précédemment, cet indicateur peut être la dimension moyenne des tavelures 13 comprises dans l'image 15 de tavelures. Un tel indicateur peut être obtenu en réalisant un calcul d'autocorrélation spatiale de l'image 15 de tavelures. Ce calcul d'autocorrélation est par exemple effectué avec la formule suivante (R1) :

$$A(x,y) = TF^{-1}\left[TF^{2}\left(I(x,y)\right)\right]$$

où : $A(x,y)$ est l'image d'autocorrélation aux coordonnées (x,y) du plan de visualisation 14, TF désigne la transformée de Fourier et $I(x,y)$ est l'intensité de la lumière obtenue aux coordonnées (x,y) du plan de visualisation 14.

Ce calcul d'autocorrélation permet d'avoir accès aux dimensions moyennes d'une tavelure selon une direction donnée, en déterminant un profil de l'image d'autocorrélation selon ladite direction, et en calculant la largeur à mi-hauteur du pic présent dans ce profil. La direction peut par exemple être la direction selon un axe Ox (ou selon un axe Oy) de l'image 15 de tavelures. Cet aspect sera détaillé dans la suite de la description.

La figure 3 représente un profil, selon une direction Ox, de l'image d'autocorrélation normalisée en ordonnée en fonction d'un nombre x de pixels en abscisse et sur laquelle il est précisé la dimension horizontale moyenne tx des tavelures, exprimée en pixels, à mi-hauteur du pic.

La lumière cohérente utilisée lors de l'étape (a) pour éclairer la solution est monochromatique et, de préférence, continue. La longueur d'onde considérée est inférieure à la dimension des microparticules.

Comme précédemment décrit, l'indicateur peut être une dimension moyenne des tavelures selon une direction donnée. Il peut être obtenu, pour une image donnée, par le calcul de la fonction d'autocorrélation de cette image, par exemple par la formule R1. Cela permet d'obtenir une dimension moyenne des tavelures, ou dimension moyenne des grains de l'image de Speckle, selon une direction donnée. Cet indicateur peut être déterminé en réalisant un profil de l'image d'autocorrélation, selon ladite direction donnée, et en appliquant un critère à ce profil. Par profil, on entend un histogramme de l'intensité des pixels de l'image considérée selon une ligne déterminée. Le critère appliqué au profil peut être, la largeur à mi-hauteur du pic apparaissant dans le profil de l'image d'autocorrélation. Cet indicateur peut également être l'aire d'une coupe du pic d'autocorrélation réalisée selon une surface donnée.

Bien entendu, d'autres techniques d'autocorrélation connues de l'homme du métier peuvent être employées. D'une façon générale, toute technique permettant d'obtenir un indicateur exprimant une dimension moyenne des tavelures pourra être utilisée.

L'indicateur peut également être la moyenne, déterminée sur une pluralité d'images réalisées dans des conditions analogues, de dimensions moyennes de tavelures obtenue sur chaque image.

L'étape (d) permet finalement d'estimer la quantité moyenne d'entités adsorbées sur les microparticules, après avoir effectué un étalonnage comme cela sera expliqué par la suite.

Nous présentons ci-après des tests qui montrent la faisabilité du procédé.

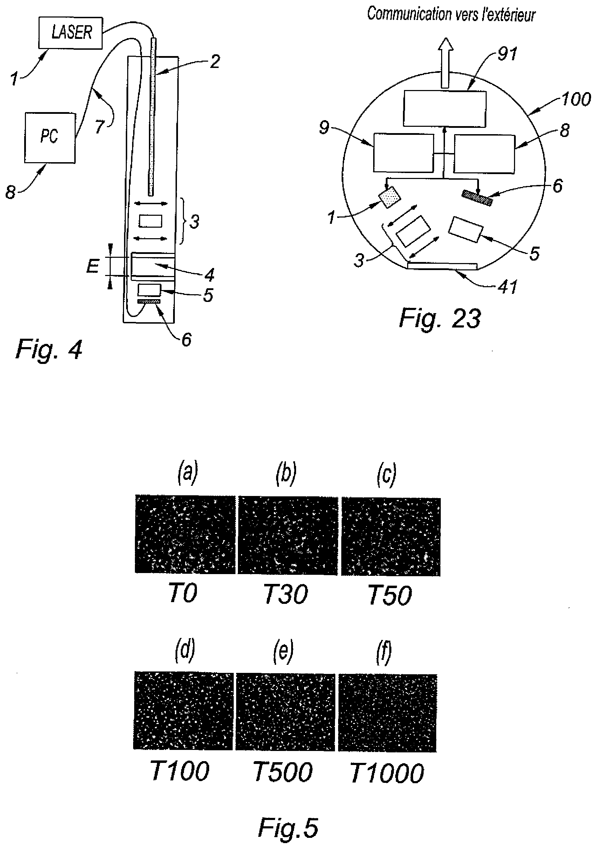

Un schéma de l'installation expérimentale utilisée pour mettre en oeuvre le procédé est représenté sur la figure 4.

La source de rayonnement Laser 1 choisie est une diode Laser émettant une lumière continue, de longueur d'onde de 532nm, et de puissance 200 mW.

La lumière issue du laser 1 est guidée par un moyen 2 de délivrance de la lumière telle qu'une fibre optique. Ce moyen 2 de délivrance est optionnel.

Un moyen 3 de mise en forme optique de la lumière est, de façon optionnelle, prévu. Il peut comprendre un jeu de lentilles, un ou plusieurs filtres, et notamment un filtre polarisant.

Le jeu de lentilles est particulièrement utile si la source de lumière est une diode laser et ce, afin de rendre le faisceau le plus fin possible.

Un filtre polarisant est particulièrement utile si la polarisation de la lumière émise par le laser, ou, le cas échéant, la diode laser, est insuffisante.

Une capacité 4 destinée à recevoir la solution est insérée dans un logement du dispositif prévu à cet effet.

La distance entre le laser 1 et la capacité 4 est d'environ 10cm.

La capacité 4 utilisée dans les tests présente des dimensions de 1cm*1cm*4cm et ses parois sont en verre. Son volume est donc de quelques cm$^3$.

Plus généralement, la capacité pourra présenter une profondeur comprise entre 1mm et 5cm, typiquement entre 5mm et 3cm. La profondeur est une dimension prise parallèlement à l'axe du faisceau de lumière incidente. La profondeur est définie en fonction des propriétés optiques de la solution contenant les microparticules, et notamment les propriétés de diffusion et d'absorption.

Les parois de la capacité 4 peuvent également être réalisées en un matériau transparent, organique ou inorganique, et par exemple du verre ou un plexiglas. L'important est que les parois soient transparentes à la lumière incidente. Ces parois peuvent présenter chacune une épaisseur comprise entre $10\mu$m et quelques cm, par exemple entre $10\mu$m et 3 cm.

Un imageur matriciel 6, ici une matrice CCD, de 1024*960 pixels, disposée en aval de la capacité 4 forme un plan de visualisation des tavelures générées par la diffusion de la lumière dans la solution.

La distance entre la capacité 4 et la matrice CCD 6 est optimisée pour obtenir des tavelures dont la dimension est de l'ordre de n*n pixels, avec n compris entre 2 et 10. Cela permet, pour un nombre donné de pixels de la matrice CCD 6, d'obtenir suffisamment de tavelures sur cette matrice CCD tout en permettant une estimation suffisamment précise des dimensions des tavelures, et en particulier de leurs dimensions moyennes.

Dans le cadre des tests présentés ici, n = 3. La distance entre la capacité 4 et la matrice CCD 6 est alors d'environ 10cm.

Par ailleurs, de façon optionnelle, mais préférentielle, le dispositif comporte un diaphragme 5 entre la capacité 4 et matrice CCD 6.

Ce diaphragme 5 permet d'éliminer les photons de lumière ayant diffusé plusieurs fois dans la solution. Ceci est particulièrement intéressant lorsque la solution est une solution très diffusante (coefficient de diffusion supérieur à quelques cm$^{-1}$), dans laquelle il existe de nombreuses diffusions multiples. Le diaphragme 5 permet d'améliorer le contraste de l'image des tavelures obtenues sur la matrice CCD 6. Lorsqu'il est employé, on pourra régler le diamètre du diaphragme 5 de façon à obtenir un contraste des images de tavelures sur la matrice CCD 6 supérieur à 0,9.

Dans le cadre des tests présentés ici, le diamètre du diaphragme est de 5 mm, ce qui permet d'obtenir le contraste de 0,9 précédemment évoqué.

En outre, de façon optionnelle, mais préférentielle, un filtre polarisant (non représenté) peut être ajouté entre la capacité 4 et la matrice CCD 6. Sa fonction est d'éliminer les photons multidiffusés, les photons perdant en effet leur polarisation lorsqu'ils sont multidiffusés. Ceci est particulièrement intéressant lorsque la solution est très diffusante et ce, afin d'améliorer le contraste des images de tavelures obtenues sur la matrice CCD 6.

Enfin, la matrice CCD 6 est connectée à un moyen 8 de traitement et d'analyse, par exemple un ordinateur, ce dernier permettant d'effectuer les différents traitements nécessaires, et en particulier les analyses de l'étape (c) du procédé.

Pour ces tests, les microparticules en suspension dans la solution sont des microparticules d'aluminium (AlOOH), solution communément désignée par le terme « gel ». Ces microparticules présentent une dimension moyenne de $3\mu$m. La concentration des microparticules dans la solution est telle que la concentration des microparticules d'Aluminium est de 1,5 g/l.

L'entité considérée ici est une protéine-modèle, en l'occurrence la *Bovine Serum Albumine* (BSA), ou albumine sérique bovine.

Plusieurs solutions ont été testées : dans un premier temps, une solution tampon à pH fixe de trishydroxyméthylaminométhane (TRIS) et, dans un second temps, une solution tampon à pH fixe de phosphate.

Lors d'une première série de tests, le demandeur a utilisé une solution tampon à pH = 6,8 de TRIS comportant des microparticules d'aluminium en suspension, en faisant varier, d'un test à l'autre, la concentration de BSA.

La solution de référence correspond à cette solution, en l'absence de BSA.

Pour chaque test effectué, on introduit une quantité donnée de BSA dans la solution comportant les microparticules d'Aluminium en suspension dans la solution.

La quantité de BSA introduite dans la solution est déterminée pour obtenir une certaine concentration de BSA, ci-après exprimée en $\mu$g de BSA par mg d'aluminium désigné par le symbole Al), sous forme de microparticules d'aluminium. Le fait d'exprimer cette concentration par rapport à la quantité d'aluminium en solution permet de s'affranchir de l'évolution de la concentration de BSA dans la solution elle-même.

En effet, le mécanisme d'adsorption de la BSA, et plus généralement d'une entité tel que définie précédemment, à la surface des microparticules en suspension peut être décomposé en trois phases.

Une première phase au cours de laquelle les protéines de BSA se mélangent dans la solution (diffusion, convection, ...) et sont transportées vers les microparticules en suspension.

Une deuxième phase au cours de laquelle les protéines de BSA sont adsorbées à la surface des microparticules d'aluminium en suspension.

Enfin, une dernière phase qui correspond à un régime d'équilibre dynamique. Dans ce régime, la quantité de BSA adsorbée n'évolue plus et, par suite, les dimensions des tavelures n'évoluent plus.

La figure 5 représente plusieurs images de tavelures obtenues, en régime d'équilibre dynamique, au niveau de la matrice CCD 6, lors de l'étape (b). Sur cette figure 5, la concentration de BSA est représentée Tx où x est la concentration de BSA exprimée en $\mu$g de BSA/mg Al.

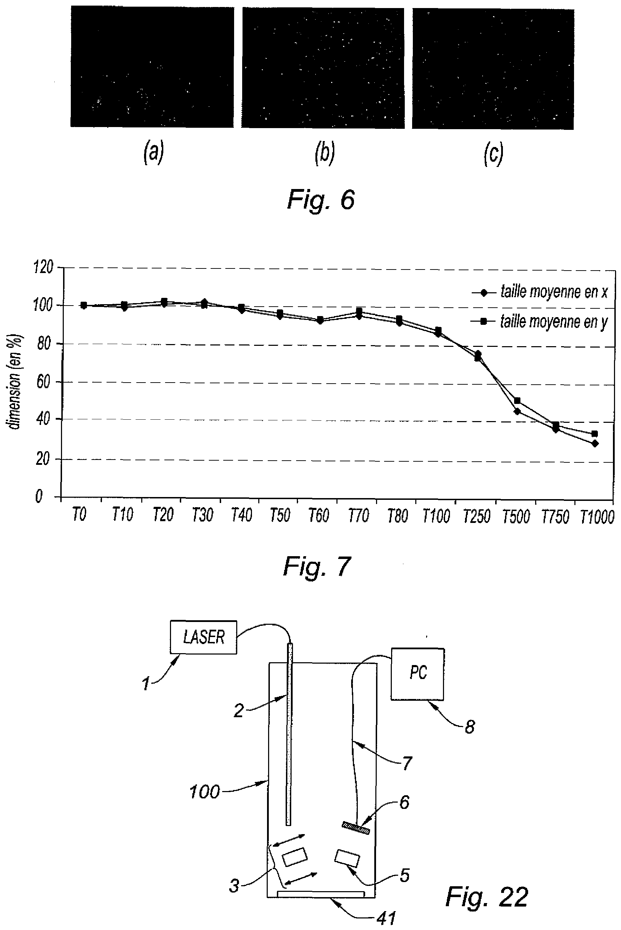

La figure 7 montre la dimension moyenne, selon deux directions perpendiculaires (Ox et Oy) des grains de Speckle pour différentes concentrations, variant entre T0 et T1000. Chaque dimension moyenne est obtenue, en calculant la fonction d'autocorrélation de l'image de Speckle correspondante, cette fonction d'autocorrélation prenant la forme d'un pic, et en déterminant la largeur à mi-hauteur de ce pic selon la direction considérée, en l'occurrence Ox ou Oy, conformément à ce qui est décrit précédemment à l'appui de la figure 3.

On comprend que T0 est une solution tampon de TRIS à pH = 6,8 comportant des microparticules d'aluminium sous forme de gel, mais pas de protéines de BSA. Il s'agit donc de la solution de référence.

Les concentrations ainsi testées varient entre T0 et T1000. Le terme Tx désigne une solution dans laquelle la quantité de protéines BSA ajoutée est telle qu'on obtient une concentration de x $\mu$g de BSA/mg d'aluminium.

Notons que ces niveaux de concentrations sont suffisamment faibles pour qu'une fois que le régime d'équilibre atteint, on puisse considérer que la quasi-totalité des protéines ajoutées est adsorbée sur les microparticules. Le régime d'équilibre est atteint au bout d'une durée variant de quelques secondes à quelques heures.

En comparant les différentes images de la figure 5, et surtout les résultats présentés dans la figure 7, on observe que plus la concentration de BSA augmente, plus la dimension des tavelures, ou grains de Speckle, diminue. La réciproque est naturellement vraie.

Ce phénomène laisse donc penser que la dimension moyenne des tavelures est corrélée à la quantité de protéines adsorbées à la surface des microparticules d'aluminium. Ainsi, lorsque cette quantité est inconnue, une mesure de la dimension moyenne des tavelures peut permettre une estimation de la quantité moyenne de protéines adsorbées sur les microparticules, moyennant une comparaison à une mesure de référence.

Ceci est surprenant car l'homme du métier aurait au contraire considéré que l'adsorption d'entités de faibles dimensions sur les microparticules n'aurait pas modifié les dimensions des grains de Speckle.

Cette mesure de référence peut par exemple être la dimension moyenne de tavelures générées par la solution de microparticules dite de référence, avant l'ajout des protéines BSA. On comprendra que de façon préférentielle, les deux mesures (mesure de référence et mesure sur la solution à caractériser) seront réalisées dans des conditions identiques : même dispositif, même concentration de microparticules d'aluminium, même traitement du signal appliqué aux images de Speckle.

La dimension d'une protéine de BSA est très inférieure à la dimension d'une particule et l'homme du métier pourrait penser que l'adsorption de ces protéines sur les microparticules ne pourrait pas être détectée, la dimension de la microparticule n'évoluant que très peu avant et après l'adsorption. L'expérience a cependant prouvé le contraire, comme le montrent les résultats précédemment commentés.

La comparaison de la dimension moyenne des tavelures obtenues pour une concentration donnée de BSA dans la solution par rapport à la solution de référence donne une information sur la quantité de protéines de BSA adsorbées sur les microparticules.

Les inventeurs ont réalisé une autre série d'essais, en remplaçant la solution TRIS par un tampon phosphate, nettement moins favorable à l'adsorption des protéines BSA sur les microparticules d'aluminium. En effet, dans une telle solution, les ions phosphate ont tendance à s'agglomérer à la surface des microparticules. Par conséquent, l'adsorption des protéines à la surface des microparticules est gênée par la présence des ions phosphate sur les sites d'adsorption.

Lors de cette deuxième série d'essais, on a utilisé une solution tampon de phosphate à pH = 6,8 comportant des microparticules d'aluminium sous forme de gel à la même concentration et des protéines de BSA à une concentration comprise entre T0 et T1000, c'est-à-dire entre 0 $\mu$g de BSA/mg Al et 1000 $\mu$g de BSA/mg Al.

La figure 6 représente, respectivement sur les figures 6(a) à 6(c), l'image des tavelures obtenues sur la matrice CCD 6 lors de l'étape (b) du procédé pour la solution de référence (figure 6a), pour la solution tampon TRIS à pH = 6,8 (figure 6b) à la concentration T1000 et, pour la solution tampon phosphate à pH = 6,8 à la concentration T1000 (figure 6c).

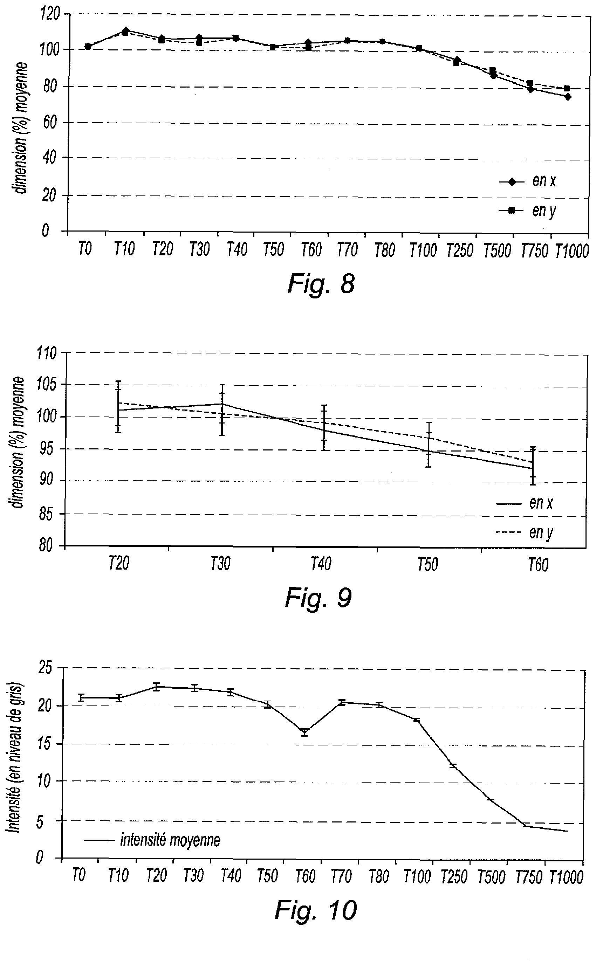

La figure 8 représente, pour chaque concentration, les dimensions moyennes des grains de speckle en utilisant un tampon phosphate.

On peut constater, sur cette figure 8, que l'évolution de la dimension moyenne des tavelures en fonction de la concentration de la quantité de protéines de BSA dans la solution ajoutées est moins marquée que lors de l'utilisation de la solution TRIS. Or, l'adsorption des protéines de BSA à la surface de microparticules est nettement plus limitée dans le cas d'une solution Phosphate que dans le cas d'une solution TRIS pour les raisons rappelées ci-dessus.

Cette comparaison permet alors de confirmer que l'évolution de la dimension des grains de Speckle est due à la quantité de protéines de BSA adsorbées à la surface des microparticules d'aluminium.

La figure 9 représente un sous-ensemble de la figure 7 (solution TRIS) pour de faibles concentrations de protéines de BSA ajoutées à la solution de microparticules. On constate que la diminution de la dimension moyenne des grains de Speckle est détectable à partir de faibles quantités de protéines ajoutées, par exemple T30.

Ainsi, il est non seulement possible d'estimer la quantité d'entités adsorbées en surface des microparticules en déterminant une dimension moyenne des grains de Speckle, mais cette estimation peut-être réalisée lorsque les quantités d'entités adsorbées sont faibles, de l'ordre de quelques dizaines de $\mu$g de BSA/mg Al.

D'autres indicateurs relatifs aux images de tavelures que celui concernant la dimension moyenne des grains de Speckle ont été testés.

Par exemple, on a également déterminé l'évolution d'un indicateur basé sur l'intensité moyenne d'image de tavelures. Pour cela, on acquiert une pluralité d'images de tavelures correspondant à une concentration donnée d'entités, en l'occurrence de protéines de BSA. On détermine l'intensité de chacune de ces images en réalisant l'intégrale de l'image, c'est-à-dire en réalisant la somme du poids des pixels constituant l'image puis en calculant la valeur moyenne des intensités de chaque image.

La figure 10 montre l'évolution de cet indicateur en fonction de la concentration de protéines de BSA ajoutées dans une solution TRIS comportant des microparticules d'aluminium. On constate de nouveau une diminution de cet indicateur en fonction de l'augmentation de la concentration de protéines de BSA.

On a décrit jusqu'à présent des essais réalisés avec un dispositif fonctionnant avec une configuration en transmission, selon laquelle la capacité 4 est disposée entre la source de lumière Laser et l'imageur matriciel.

Selon un autre mode de réalisation, la configuration de mesure du dispositif est dite en rétrodiffusion, la source de lumière et l'imageur matriciel étant alors situés face à une même face de la capacité 4.

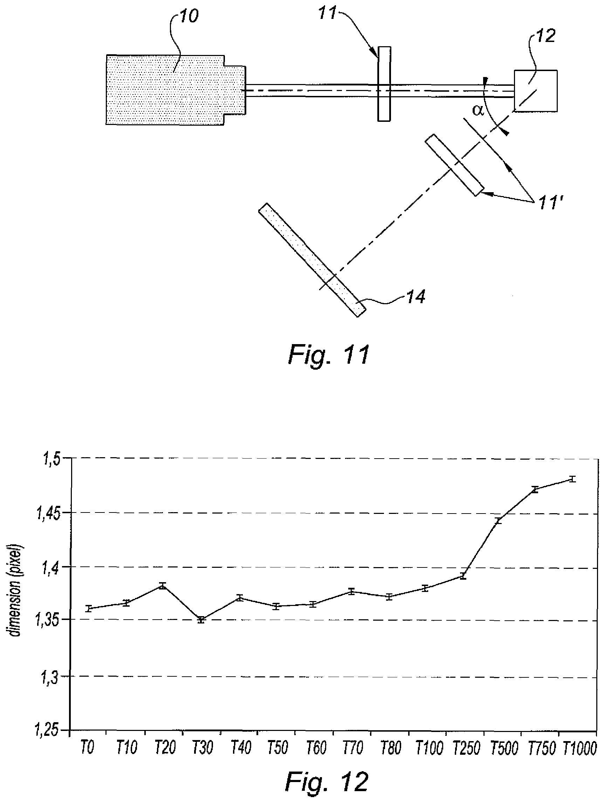

Une telle configuration de mesure est présentée dans la figure 11.

Sur cette figure 11, une source de rayonnement Laser 10 éclaire une partie d'une capacité 12, le rayonnement diffusé étant collecté par un imageur matriciel 14, dont l'axe optique 141 fait un angle $\alpha$ avec l'axe optique 101 de la source Laser 10. Cet angle $\alpha$ est inférieur à 45°, et de préférence compris entre quelques degrés et 20°, 12° dans le cas présent. De façon préférentielle, l'angle $\alpha$ sera choisi le plus faible possible. Des filtres polarisants 11, 11' sont placés respectivement entre la source de lumière Laser 10 et la capacité 12 (le filtre 11 est alors appelé polariseur) et entre la capacité 12 et l'imageur matriciel 14 (le filtre 11' est alors appelé analyseur). En particulier, un diaphragme peut être placé entre la capacité 12 et l'imageur 14.

Contrairement au mode de réalisation en transmission, ces filtres sont orientés orthogonalement l'un par rapport à l'autre, de façon à éliminer la lumière réfléchie par la capacité, cette lumière réfléchie étant polarisée de la même façon que la lumière incidente. La source de rayonnement Laser 10 et l'imageur matriciel 14 sont ceux précédemment choisis pour les tests réalisés en transmission.

La figure 12 représente l'évolution de la dimension moyenne des tavelures alors détectées par l'imageur CCD 14, en fonction de la concentration de protéines BSA ajoutées dans une capacité comprenant des microparticules d'aluminium dans une solution TRIS. La dimension est une dimension moyenne prise selon un axe Ox et exprimée en pixels.

On observe à nouveau une évolution de la dimension moyenne des tavelures en fonction de la quantité de protéines de BSA adsorbées sur des microparticules, si bien que la dimension moyenne des tavelures peut être considérée comme un indicateur de cette quantité.

Toutefois, contrairement au cas précédemment décrit (cf. figures 7 et 9), la fonction reliant la dimension moyenne des tavelures à la quantité de protéines adsorbées est une fonction croissante, à quelques fluctuations près.

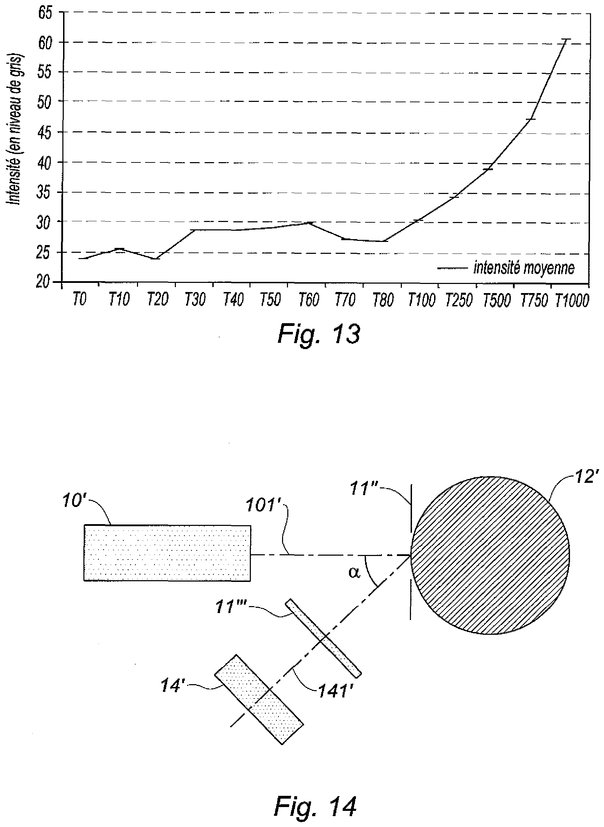

On a également déterminé l'évolution de l'intensité moyenne des images de tavelures en fonction de la quantité de protéines de BSA adsorbées à la surface des microparticules (cf. figure 13), la détermination de cette intensité étant réalisée de façon analogue au premier mode de réalisation (figure 10), c'est-à-dire selon la configuration en transmission représentée sur la figure 4. Pour une concentration donnée de protéines BSA, on acquiert alors une pluralité d'images de tavelures, typiquement quelques dizaines (et 50 dans cet exemple), dont on peut déterminer les intensités, en déterminant par exemple l'intégrale des pixels sur tout ou partie de l'image de tavelures détectée par l'imageur CCD. On détermine alors, à chaque concentration de protéines BSA ajoutée, l'intensité moyenne des images de tavelures obtenues.

Contrairement aux résultats obtenus sur la base d'un indicateur relatif à la dimension des tavelures, dont les résultats sont présentés sur la figure 10, on obtient une fonction sensiblement croissante, à quelques fluctuations de mesure près. L'intensité moyenne des images de tavelures peut donc être à considérer comme un indicateur de la quantité de protéines adsorbées sur des microparticules.

D'autres tests ont été effectués avec une configuration en rétrodiffusion du dispositif.

Le dispositif est représenté sur la figure 14.

Sur cette figure 14, une source de rayonnement Laser 10' éclaire une partie d'une capacité 12', le rayonnement diffusé étant collecté par un imageur matriciel 14', dont l'axe optique 141' fait un angle $\alpha$ avec l'axe optique 101' de la source Laser 10'. Des filtres polarisants 11", 11'" sont placés respectivement entre la source de lumière Laser 10' et la capacité 12' et entre la capacité 12' et l'imageur matriciel 14'.

La source de rayonnement laser 10' peut être un laser DPSS (pour « Diode-Pulsed Solid State » laser selon la terminologie anglo-saxonne) émettant à une longueur d'onde de 532nm. La capacité 12' peut être un cristallisoir à agitation magnétique.

L'angle $\alpha$ est inférieur à 45°, et de préférence compris entre quelques degrés et 20°, en l'occurrence ici d'une vingtaine de degrés. De façon préférentielle, l'angle $\alpha$ sera choisi le plus faible possible.

Le filtre polarisant 11" peut être un diaphragme, par exemple de diamètre 3cm lorsque la capacité est un cristallisoir à agitation magnétique, afin de limiter les effets de réflexion sur le barreau magnétique du cristallisoir.

Le filtre polarisant 11'" (analyseur) peut être un polariseur croisé situé entre la capacité 12' et l'imageur matriciel 14', de manière similaire au dispositif représenté sur la figure 11. Il permet d'améliorer la qualité du signal réfléchi par la capacité 12', en particulier lorsque la solution est très diffusante.

Par ailleurs, il convient de noter qu'un diaphragme (non représenté) peut également être ajouté entre la capacité 12' et l'imageur matriciel 14' afin d'éliminer les photons de lumière ayant diffusé plusieurs fois dans la solution. Ceci est particulièrement intéressant lorsque la solution est une solution très diffusante (coefficient de diffusion supérieur à quelques cm$^{-1}$).

La distance entre la capacité 12' et l'imageur matriciel 14' est d'environ 20cm.

L'imageur matriciel 14' est en l'occurrence caméra FLEA2.

Les conditions de tests réalisés avec le dispositif représenté sur la figure 14 sont les suivantes.

Les microparticules en suspension dans la solution tampon contenue dans la capacité 12' sont des microparticules d'hydroxyde d'aluminium (AlOOH). La dimension moyenne est de 3 microns.

L'entité considérée est toujours la Bovine Serum Albumine (BSA), ou albumine sérique bovine.

La solution tampon est une solution TRIS, de pH = 6,8.

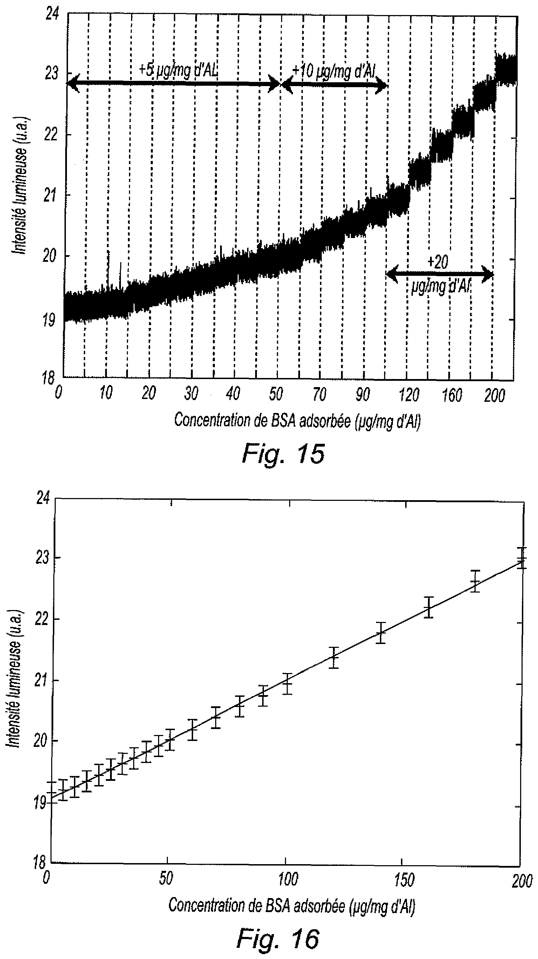

Dans un premier test, dont les résultats sont présentés à l'appui de la figure 15, la concentration de BSA a varié de 0 à 200μg de BSA/mg d'aluminium. Ces concentrations sont faibles et sont d'intérêt dans la mesure où il s'agit du niveau de concentration généralement rencontré dans le domaine de la formulation de vaccins.

Le test a consisté à introduire successivement une certaine quantité de BSA dans la solution tampon comprenant les microparticules d'aluminium.

Une quantité de 5 μg de BSA/mg d'aluminium a été ajoutée tous les 100s, jusqu'à 50 μg de BSA/mg d'aluminium. Puis, une quantité de 10 μg de BSA/mg d'aluminium a été ajoutée tous les 100s, jusqu'à 100 μg de BSA/mg d'aluminium. Enfin, une quantité de 20 μg de BSA/mg d'aluminium a été ajoutée tous les 100s, jusqu'à 200 μg de BSA/mg d'aluminium.

La figure 15 représente l'intensité lumineuse (unité arbitraire) obtenue au niveau de l'imageur matriciel 14', en fonction de l'évolution de la quantité de BSA adsorbée/mg d'aluminium. Il convient de noter que la quantité de protéine ajoutée dans la solution tampon correspond à la quantité adsorbée par les microparticules d'aluminium, tant que la solution n'est pas arrivée à saturation.

L'intensité lumineuse forme ici l'indicateur relatif à l'image de tavelures captée par l'imageur matriciel 14'. Elle est obtenue en sommant la valeur de pixels contenus sur tout ou partie de cette image.

On note que l'augmentation de la quantité de BSA se traduit par une augmentation de l'intensité lumineuse obtenue sur la caméra. Par ailleurs, le saut d'intensité obtenu à chaque ajout de BSA est directement lié à la quantité de BSA introduite à chaque fois.

Ceci met clairement en évidence le lien entre la quantité de protéines de BSA adsorbées sur les microparticules d'aluminium et l'intensité lumineuse reçu par l'imageur matriciel 14'.

La figure 16 représente les valeurs moyennes, pour chaque palier d'introduction de protéines de BSA dans la solution tampon, des résultats bruts représentés sur la figure 15 (l'échelle n'est pas linéaire en abscisse sur la figure 15, contrairement à la figure 16). On remarque que l'intensité croît linéairement avec la concentration en protéines de BSA.

Il convient de noter que les auteurs ont réalisé un test similaire sans introduire de protéines de BSA dans la solution tampon TRIS et n'ont constaté aucune évolution de l'intensité lumineuse comparable à celle de la figure 15. Par ailleurs, les auteurs ont également effectué d'autres tests avec une solution tampon PHOS d'une part, avec l'ajout de protéines de BSA et d'autre part, sans ajout de protéines de BSA. Le tampon PHOS est connu pour inhiber l'adsorption des protéines de BSA sur les microparticules d'aluminium. Ces tests ont montré que l'évolution de l'intensité lumineuse reçue par l'imageur matriciel 14' était comparable à celle obtenue pour le test avec le tampon TRIS, sans ajout de protéines de BSA.

Afin de vérifier que l'invention pouvait également fonctionner pour des concentrations plus élevées de BSA, les auteurs ont réalisé un autre test.

Les conditions de ce test sont les mêmes que les conditions de test conduisant aux résultats représentés sur les figures 15 et 16. Cependant, le mode d'introduction des protéines de BSA dans la solution tampon est modifié.

En effet, à partir d'une solution tampon TRIS comportant des microparticules d'aluminium en suspension, des ajouts de 100μg de protéines de BSA ont été effectués, jusqu'à 2000 μg de BSA ajoutée/mg d'aluminium.

On note que l'intensité lumineuse augmente avec l'augmentation de la concentration de protéines de BSA. Cela met en évidence le fait que l'invention peut être mise en oeuvre pour des concentrations allant au-delà de 200 μg de BSA/mg d'aluminium. Par conséquent, des applications autres que la formulation de vaccins peuvent être envisagées.

On note également qu'un effet de saturation de la solution advient vers 1200 μg de BSA/mg d'aluminium. En effet, au-delà de cette concentration, l'évolution de l'intensité lumineuse observée au niveau de l'imageur matriciel 14' en fonction de la quantité de BSA n'est plus linéaire mais s'infléchit pour tendre vers une valeur constante.

D'autres tests ont été effectués avec le dispositif représenté sur la figure 14, en utilisant des protéines autres que la protéine BSA.

La solution tampon utilisée est un TRIS, de pH = 6,8, comportant des microparticules d'aluminium en suspension (AlOOH).

Les protéines utilisées sont les suivantes : α-cas, α-cas déphosphorylé, IgG et enfin, la protéine BSA pour référence.

Pour chaque test, la concentration de la protéine ajoutée dans la solution tampon est la même, en l'occurrence de 20mg/mL et ce, afin d'obtenir des mesures comparables d'une protéine à l'autre.

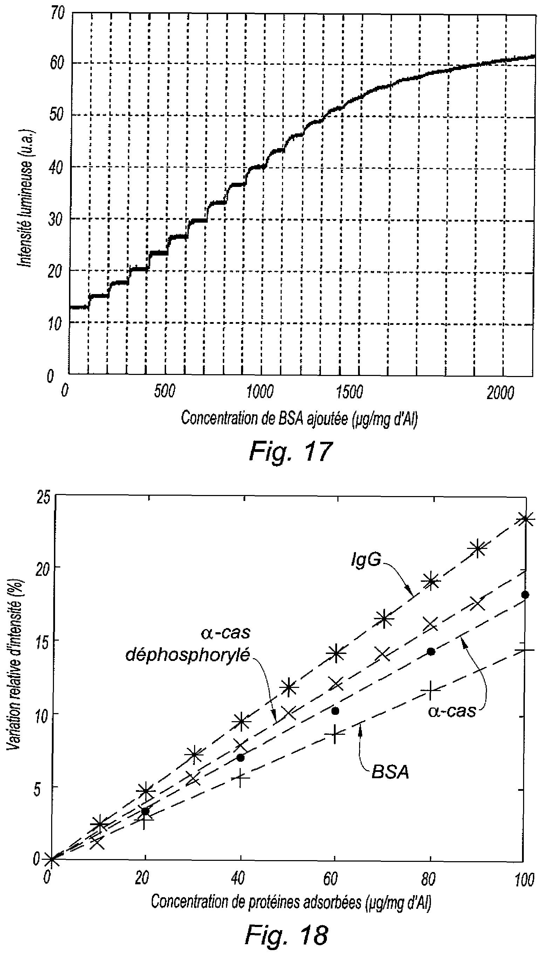

Les résultats sont représentés sur la figure 18. Cette figure 18 montre la variation relative de l'intensité lumineuse détectée par l'imageur matriciel 14', en fonction de la quantité de protéines adsorbées. Les tests ont été effectués pour des concentrations de protéines allant jusqu'à 100 μg/mg d'aluminium.

Il est intéressant de constater que l'intensité lumineuse augmente, pour tous les types de protéines testées. Il est donc envisageable de mettre en oeuvre l'invention avec de nombreuses protéines différentes.

Par ailleurs, quelle que soit la protéine testée, l'évolution reste sensiblement linéaire.

On note cependant que la pente de ces évolutions linéaires diffère d'une protéine à l'autre. Lors de l'utilisation du dispositif, il conviendra donc de savoir quelle protéine est employée.

Des tests additionnels ont été effectués, pour comparer la variation de l'intensité lumineuse captée par l'imageur matriciel 14' en fonction de la concentration de protéines adsorbées, pour la protéine BSA d'une part, et l'antigène de l'hépatite B (HBs) d'autre part.

Pour ces tests, la solution est un tampon TRIS, de pH = 6,8, comprenant des microparticules d'aluminium en suspension (AIOOH).

Les tests ont été effectués pour des concentrations de protéines adsorbées allant jusqu'à 50 μg/mg d'aluminium.

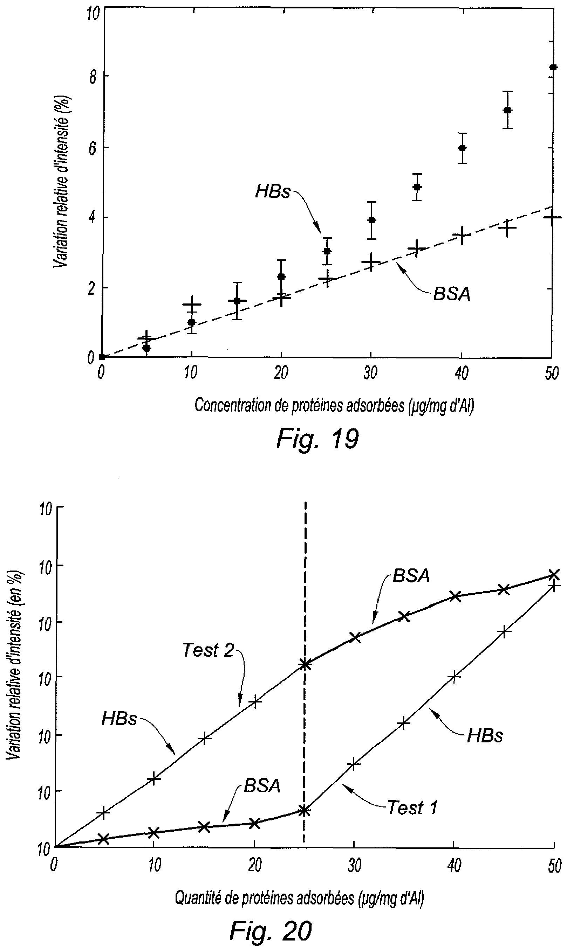

Les résultats sont présentés sur la figure 19.

On note sur cette figure que l'invention pourrait également être mise en œuvre avec la protéine HBs.

Dans les tests précédents, il a été démontré que l'invention peut être mise en œuvre pour différentes entités.

Il convient de noter que l'invention peut également être utilisée en mettant en œuvre, en même temps, plusieurs entités de natures différentes.

En effet, les pentes de variation relative d'intensité lumineuse reçue par l'imageur matriciel 14' différant d'une entité à l'autre (cf. figure 18, par exemple), il est possible de discriminer les différentes entités utilisées.

Ceci est illustré à l'appui de la figure 20.

Sur cette figure 20, on a représenté la variation relative de l'intensité lumineuse reçue par l'imageur matriciel 14', en fonction de la quantité d'entités adsorbées par les microparticules en suspension.

Les entités considérées sont en l'occurrence les protéines BSA et HBs.

Lors d'un premier test (test 1), on ajouté des protéines de BSA dans la solution tampon TRIS ne comportant que les microparticules d'aluminium en suspension, jusqu'à une quantité de 25 μg de BSA/mg d'aluminium. Puis, on a ajouté les antigènes de l'hépatite B, jusqu'à une concentration totale de 50 μg/mg d'aluminium.

Pour ce premier test, on observe bien les pentes différentes liées aux différentes protéines utilisées.

Lors d'un deuxième test (test 2), on ajouté des antigènes de l'hépatite B dans la solution tampon TRIS ne comportant que les microparticules d'aluminium en suspension, jusqu'à une quantité de 25 μg de HBs/mg d'aluminium. Puis, on a ajouté les protéines de BSA, jusqu'à une concentration totale de 50 μg/mg d'aluminium.

Là également, on observe bien les pentes différentes liées aux différentes protéines utilisées.

Par ailleurs, on note que la différence finale (à 50 μg/mg d'aluminium) entre les deux tests est négligeable, ce qui montre que le dispositif de mesure est additif.

Enfin, un dernier test a été effectué avec le dispositif représenté sur la figure 14. Il met en évidence que l'invention peut être utilisée pour mesurer la quantité d'entités désorbées des microparticules d'adjuvants.

Dans un premier temps, une solution tampon TRIS comprenant des microparticules d'aluminium en suspension a été préparée.

Puis, on a ajouté, dans la solution, une quantité de BSA telle qu'elle permette d'obtenir une concentration de 500 μg de BSA adsorbée/mg d'aluminium.

Enfin, un volume de 30mL de tampon phosphate (PHOS) à 500 mMol a été ajouté dans la solution, pour désorber les protéines de BSA, le phosphate entrant en compétition avec la BSA.

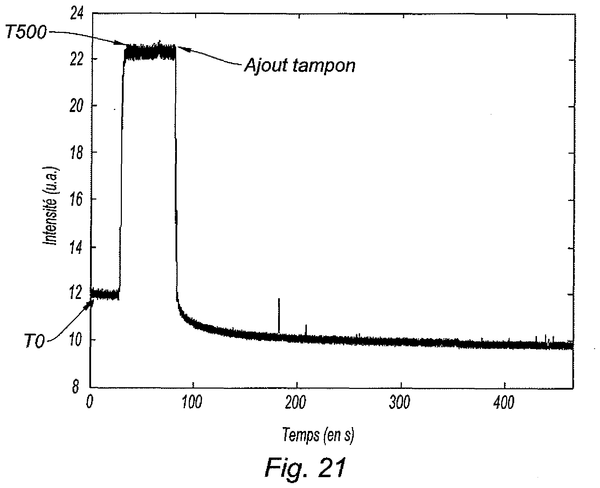

Les résultats de ce test sont fournis sur la figure 21.

Sur cette figure 21, on a représenté l'évolution de l'intensité lumineuse obtenue au niveau de l'imageur 14', en fonction du temps.

On note que l'ajout du tampon phosphate fait effectivement chuter l'intensité lumineuse détectée par l'imageur 14', ce qui caractérise la désorption des protéines de BSA.

La cinétique de la désorption peut finalement être analysée de la même façon que la cinétique d'adsorption.

Pour utiliser les résultats présentés précédemment dans un cadre industriel, il suffit alors d'effectuer un étalonnage avec le dispositif considéré pour obtenir les courbes, selon le cas, de la figure 7, 8, 10, 12, 13 ou 15 à 21. En particulier, on choisit une solution tampon, la nature et les dimensions des microparticules, la concentration des microparticules dans la solution et la nature des entités susceptibles d'être déposées/extraites des microparticules.

Cet étalonnage est réalisé en faisant en sorte qu'on réalise différentes mesures étalons, la quantité d'entités adsorbées sur les microparticules étant maîtrisée.

Une fois cette courbe d'étalonnage obtenue, on peut alors suivre l'évolution de l'adsorption de cette entité dans cette solution particulière pour tout processus industriel ultérieur.

Ceci peut s'effectuer en suivant l'évolution des dimensions des tavelures obtenues sur l'imageur matriciel. Ainsi, en disposant d'un indicateur relatif à une image de tavelures, ou à une pluralité d'images de tavelures, on peut déterminer une quantité d'entités déposées à la surface de microparticules en comparant cet indicateur avec un indicateur de référence, ce dernier pouvant être établi en réalisant une mesure sur la solution de microparticules avant ajout des entités, ou encore sur une solution étalon. Cette quantité d'entités déposée sera déduite de cette comparaison.

Par ailleurs, il convient de noter qu'il n'est pas obligatoire de prévoir une source de lumière cohérente (cas du laser), même si cela est avantageux. Par exemple, Il est envisageable de remplacer le laser par une diode électroluminescente afin d'éclairer la solution.

Le procédé décrit ci-dessus permet de déterminer la quantité d'entités adsorbées sur les microparticules. La durée de chaque mesure étant courte, généralement inférieure à quelques secondes, cette mesure est compatible avec un suivi en ligne d'un procédé industriel, c'est-à-dire en temps réel.

On comprendra qu'une telle méthode permet également un suivi de la cinétique d'adsorption des entités sur les microparticules, cette cinétique étant obtenue par comparaison des résultats issus de mesures successives.

Les dispositifs représentés sur les figures 4 et 11 sont des dispositifs fonctionnant respectivement en transmission et en réflexion.

D'autres types de dispositifs peuvent être envisagés.

Ainsi, le dispositif représenté sur la figure 22 est un dispositif fonctionnant en rétrodiffusion, pouvant également faire l'objet de variantes de réalisations. Il comporte les mêmes moyens que ceux présents dans le dispositif décrit à l'appui de la figure 4, ces moyens portant les mêmes références.

Il faut cependant noter, qu'à l'exception du laser 1 et de l'ordinateur 8, les moyens de ce dispositif sont intégrés dans un réceptacle 100 étanche qui peut être plongée dans la solution. Ce réceptacle peut être assimilé à une sonde immergeable dans la solution de microparticules en suspension, dont la flottabilité est contrôlée. La cuve comportant la solution est alors accessible par une fenêtre 41, laquelle peut être en verre ou en un matériau plastique transparent.

Une variante de réalisation de ce dispositif, fonctionnant également en rétrodiffusion, est représentée sur la figure 23. Les moyens similaires à ceux présentés dans le dispositif décrit à l'appui de la figure 4 portent les mêmes références. Là encore, ce dispositif peut être étanche et immergeable dans la solution de microparticules en suspension.

Selon cette variante, le dispositif se présente sous la forme d'un réceptacle 100 assimilable à une sonde. Cette sonde présente généralement un diamètre inférieur à 15cm, de préférence compris entre quelques centimètres et 10cm.

Cette sonde 100 est étanche et complètement immergeable dans la solution. A cet effet, le laser est remplacé par une diode laser 1 miniaturisée, alimentée en énergie par une batterie 9. Le moyen de traitement 8 est également miniaturisé et intégré à la sonde 100. Pour communiquer avec l'extérieur, il est prévu un moyen dédié 91, susceptible de transmettre des données par radiofréquence ou par liaison filaire.

Les dispositifs présentés à l'appui des figures 22 et 23 peuvent indifféremment utiliser une source de lumière cohérente (cas du laser) ou non (cas de la diode électroluminescente).

## Revendications

1. Procédé d'estimation de la quantité d'entités déposées sur des microparticules en suspension dans une solution, **caractérisé en ce qu'**il comprend les étapes suivantes :

   (a) on éclaire la solution avec une source de lumière;
   (b) on détecte un signal optique formé par la diffusion, dans la solution, de la lumière d'éclairage; ce signal optique détecté étant au moins une image de tavelures.
   (c) on analyse le signal optique obtenu à l'étape (b) afin d'obtenir un indicateur relatif à ce signal;
   (d) on compare l'indicateur obtenu à l'étape (c) à un indicateur de référence, obtenu pour une solution de référence la comparaison permettant d'estimer la quantité d'entités déposées sur les microparticules.

2. Procédé selon la revendication1, dans lequel l'indicateur obtenu à l'étape (c) correspond à une dimension moyenne des tavelures de ladite au moins une image de tavelures.

3. Procédé selon la revendication1, dans lequel l'indicateur obtenu à l'étape (c) correspond à l'intensité moyenne de ladite au moins une image de tavelures.

4. Procédé selon l'une des revendications précédentes, dans lequel les entités présentent une dimension comprise entre 1nm et 10$\mu$m et les microparticules présentent une dimension comprise entre 0,1$\mu$m et 100$\mu$m.

5. Procédé selon l'une des revendications précédentes, dans lequel la solution est choisie parmi l'une des solutions suivantes : solution aqueuse, par exemple une solution aqueuse saline, ou solution de trishydroxyméthylaminométhane.

6. Procédé selon l'une des revendications précédentes, dans lequel l'étape (a) s'effectue avec une lumière cohérente.

7. Procédé selon l'une des revendications précédentes, dans lequel l'étape (a) s'effectue avec une lumière monochromatique.

8. Dispositif d'estimation de la quantité d'entités déposées sur des microparticules en suspension dans une solution, **caractérisé en ce qu'**il comprend :

   - une source (1, 10, 10') de lumière destinée à éclairer la solution ;
   - un imageur (6, 14, 14') pour détecter un signal optique formé par la diffusion de la lumière dans la solution ; ce signal optique étant au moins une image de tavelures. et
   - un moyen (8) d'analyse et de traitement du signal optique ainsi détecté pour obtenir un indicateur susceptible d'être comparé à un indicateur de référence obtenu pour une solution de référence, la comparaison permettant d'estimer la quantité d'entités déposées sur les microparticules.

9. Dispositif selon la revendication précédente, dans lequel la source de lumière et l'imageur (6) sont intégrés dans un réceptacle (100) étanche, immergeable dans la solution.

10. Dispositif selon l'une des revendications 8 ou 9, comprenant, en outre, une capacité (4, 12, 12') destinée à contenir la solution.

11. Dispositif selon la revendication précédente, dans lequel la source (1, 10, 1') de lumière et l'imageur sont disposés de part et d'autre de la capacité (4, 12, 12').

12. Dispositif selon l'une des revendications 8 à 11, comprenant un moyen (5), disposé avant l'imageur, pour éliminer les photons de lumière ayant diffusés plusieurs fois dans la solution.

13. Dispositif selon l'une des revendications 8 à 12, dans lequel la source de lumière est une source de lumière cohérente, par exemple formée par un laser.

14. Dispositif selon l'une des revendications 8 à 13, dans lequel l'imageur est un imageur matriciel, par exemple de type matrice CCD, CMOS ou matrice de photodiodes.

15. Utilisation d'un dispositif selon l'une des revendications 8 à 14 pour l'estimation de la quantité d'entités adsorbées et/ou désorbées sur les microparticules en suspension dans la solution.

**Patentansprüche**

1. Verfahren zur Schätzung der Menge an Einheiten auf in einer Lösung suspendierten Mikropartikeln, **dadurch gekennzeichnet, dass** es die folgenden Schritte umfasst:

   (a) Beleuchten der Lösung mit einer Lichtquelle;
   (b) Erfassen eines optischen Signals, das durch die Diffusion von Beleuchtungslicht in der Lösung gebildet wird; wobei dieses erfasste optische Signal mindestens ein Speckle-Bild ist;
   (c) Analyse des in Schritt (b) erhaltenen optischen Signals, um einen auf dieses Signal bezogenen Indikator zu erhalten;
   (d) Vergleich des in Schritt (c) erhaltenen Indikators mit einem für eine Referenzlösung erhaltenen Referenzindikator, wobei der Vergleich es ermöglicht, die Menge der auf den Mikropartikeln abgelagerten Einheiten zu schätzen.

2. Verfahren nach Anspruch 1, wobei der in Schritt (c) erhaltene Indikator einer durchschnittlichen Größe der Speckles des mindestens einen Speckle-Bildes entspricht.

3. Verfahren nach Anspruch 1, wobei der in Schritt (c) erhaltene Indikator einer durchschnittlichen Intensität des mindestens einen Speckle-Bildes entspricht.

4. Verfahren nach einem der vorstehenden Ansprüche, wobei die Einheiten eine Größe im Bereich zwischen 1 nm und 10 $\mu$m aufweisen und die Mikropartikel eine Größe im Bereich zwischen 0,1 $\mu$m und 100 $\mu$m aufweisen.

5. Verfahren nach einem der vorstehenden Ansprüche, wobei die Lösung aus einer der folgenden Lösungen ausgewählt wird: einer wässrigen Lösung, beispielsweise einer wässrigen Salzlösung, oder einer Trishydroxymethylaminomethanlösung.

6. Verfahren nach einem der vorstehenden Ansprüche, wobei Schritt (a) mit einem kohärenten Licht durchgeführt wird.

7. Verfahren nach einem der vorstehenden Ansprüche, wobei Schritt (a) mit einem monochromatischen Licht durchgeführt wird.

8. Vorrichtung zur Schätzung der Menge an auf in einer Lösung suspendierten Mikropartikeln abgelagerten Einheiten, **dadurch gekennzeichnet, dass** es umfasst:

   - eine Lichtquelle (1, 10, 10'), die zum Beleuchten der Lösung bestimmt ist;
   - einen Bildgeber (6, 14, 14') zum Erfassen eines optischen Signals, das durch die Diffusion von Licht in der Lösung gebildet wird; wobei das optische Signal mindestens ein Speckle-Bild ist; und

- ein Mittel (8) zum Analysieren und Verarbeiten des so erfassten optischen Signals, um einen Indikator zu erhalten, der mit einem für eine Referenzlösung erhaltenen Referenzindikator verglichen werden kann, wobei der Vergleich es ermöglicht, die Menge von auf den Mikropartikeln abgelagerten Einheiten zu schätzen.

9. Vorrichtung nach dem vorstehenden Anspruch, wobei die Lichtquelle und der Bildgeber (6) in einem dichten Behälter (100) integriert sind, der in die Lösung eingetaucht werden kann.

10. Vorrichtung nach einem der Ansprüche 8 oder 9, des Weiteren umfassend eine Kapazität (4, 12, 12'), die zur Aufnahme der Lösung bestimmt ist.

11. Vorrichtung nach dem vorstehenden Anspruch, wobei die Lichtquelle (1, 10, 1') und der Bildgeber zu beiden Seiten der Kapazität (4, 12, 12') angeordnet sind.

12. Vorrichtung nach einem der Ansprüche 8 bis 11, umfassend ein vor dem Bildgeber angeordnetes Mittel (5) zum Entfernen der Lichtphotonen, die in Lösung mehrfach diffundiert sind.

13. Vorrichtung nach einem der Ansprüche 8 bis 12, wobei die Lichtquelle eine kohärente, zum Beispiel durch einen Laser gebildete, Lichtquelle ist.

14. Vorrichtung nach einem der Ansprüche 8 bis 13, wobei der Bildgeber ein Matrix-Bildgeber, zum Beispiel vom Typ CCD-Matrix, CMOS-Matrix oder Photodioden-Matrix, ist.

15. Verwendung einer Vorrichtung nach einem der Ansprüche 8 bis 14 zur Schätzung der Menge an Einheiten, die auf den in der Lösung suspendierten Mikropartikeln adsorbiert und/oder desorbiert sind.

**Claims**

1. Method for estimating the quantity of entities deposited on microparticles suspended in a solution, **characterised in that** it comprises the following steps:

(a) the solution is illuminated with a light source;
(b) an optical signal formed by the diffusion, in the solution, of the illuminating light is detected; this detected optical signal being at least one image of scabs;

(c) the optical signal obtained in step (b) is analysed in order to obtain an indicator relating to this signal;
(d) the indicator obtained in step (c) is compared to a reference indicator, obtained for a reference solution, the comparison making it possible to estimate the quantity of entities deposited on the microparticles.

2. Method according to claim 1, wherein the indicator obtained in step (c) corresponds to an average dimension of the scabs of said at least one image of scabs.

3. Method according to claim 1, wherein the indicator obtained in step (c) corresponds to the average intensity of said at least one image of scabs.

4. Method according to one of the preceding claims, wherein the entities present a dimension comprised between 1 nm and 10 $\mu$m, and the microparticles present a dimension comprised between 0.1 $\mu$m and 100 $\mu$m.

5. Method according to one of the preceding claims, wherein the solution is chosen from among one of the following solutions: aqueous solution, for example a saline aqueous solution, or trishydroxymethylaminomethane solution.

6. Method according to one of the preceding claims, wherein step (a) is carried out with a coherent light.

7. Method according to one of the preceding claims, wherein step (a) is carried out with a monochromatic light.

8. Device for estimating the quantity of entities deposited on microparticles suspended in a solution, **characterised in that** it comprises:

- a light source (1, 10, 10') intended to illuminate the solution;
- an imager (6, 14, 14') to detect an optical signal formed by the diffusion of the light in the solution; this optical signal being at least one image of scabs, and
- a means (8) for analysing and processing the optical signal thus detected to obtain an indicator comparable to a reference indicator obtained for a reference solution, the comparison making it possible to estimate the quantity of entities deposited on the microparticles.

9. Device according to the preceding claim, wherein the light source and the imager (6) are integrated in a sealed container (100), which can be immersed in the solution.

10. Device according to one of claims 8 or 9, further comprising a capacity (4, 12, 12') intended to contain the solution.

11. Device according to the preceding claim, wherein the light source (1, 10, 1') and the imager are arranged on either side of the capacity (4, 12, 12').

12. Device according to one of claims 8 to 11, comprising a means (5), arranged in front of the imager, to eliminate light photons which have diffused several times in the solution.

13. Device according to one of claims 8 to 12, wherein the light source is a coherent light source, for example formed by a laser.

14. Device according to one of claims 8 to 13, wherein the imager is a matrix imager, for example of CCD, CMOS matrix or photodiode matrix type.

15. Use of a device according to one of claims 8 to 14 to estimate the quantity of entities adsorbed and/or desorbed on the microparticles suspended in the solution.

Fig. 1

Fig. 2

x (pixels)

Fig. 3

Fig. 4

Communication vers l'extérieur

Fig. 23

(a)     (b)     (c)

T0     T30     T50

(d)     (e)     (f)

T100     T500     T1000

Fig.5

(a)　　　　　　(b)　　　　　　(c)

Fig. 6

Fig. 7

Fig. 22

Fig. 8

Fig. 9

Fig. 10

Fig. 11

Fig. 12

*Fig. 13*

*Fig. 14*

*Fig. 15*

*Fig. 16*

Fig. 17

Fig. 18

**Fig. 19**

**Fig. 20**

Fig. 21

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007054417 A1
- EP 0118894 A2

- WO 9008961 A1

**Littérature non-brevet citée dans la description**

- **LUCAS L.J.** Latex immunoagglutination assay for a vasculitis marker in a microfluidic device using static light scattering detection. *Biosensors and bioelectronics,* 2007, vol. 22
- **LUCAS L.J.** Lab-on-a-chip immunoassay for multiple antibodies using microsphere light. *biosensors and bioelectronics,* 2007, vol. 23

- **PIEDERRIERE Y.** Etude du speckle de milieux diffusants liquides. Application à la détermination de paramètres biophysiques. *thèse de doctorat présentée à l'université de Bretagne occidentale*